# EUROPÄISCHE PATENTANMELDUNG

(11) **EP 4 685 018 A1**
(43) Veröffentlichungstag der Anmeldung: **28.01.2026**
(21) Anmeldenummer: 25190610.3
(22) Anmeldetag: 21.07.2025
(51) Int. Cl.: B60T 1/087, B60T 10/02, F16D 57/04

(54) **HYDRODYNAMISCHER RETARDER**

(30) Priorität: 26.07.2024 DE 102024121285
(71) Anmelder: Voith Patent GmbH, 89522 Heidenheim (DE)
(72) Erfinder: LAUKEMANN, Dieter, 74586 Frankenhardt (DE); BLUMENSTOCK, Martin, 74586 Frankenhardt (DE); DEEG, Martin, 73499 Wört (DE); HEINRICH, Markus, 73497 Tannhausen (DE); ABEL, Matthias, 91602 Dürrwangen (DE)
(74) Vertreter: Voith Patent GmbH - Patentabteilung

(57) **Zusammenfassung**

Es wird ein hydrodynamischer Retarder vorgeschlagen, der ein Rotor und ein Stator umfasst, die in einem zweiteiligen Gehäuse, einem Rotorgehäuseteil und einem Statorgehäuseteil angeordnet sind, wobei Rotor und Stator einen torusförmigen Arbeitsraum ausbilden, der über einen Einlasskanal und/oder eine Pumpe mit einem Arbeitsmedium befüllbar und über eine Auslasskanal und/oder einen Rückführkanal entleerbar ist, wobei der Rückführkanal eine Abschöpfbohrung im Rotorgehäuse mit einem Tank verbindet, so dass Arbeitsmedium aus dem Arbeitsraum abführbar ist, wobei der Rotor verschiebbar auf einer Retarderwelle positioniert ist und von einer Nicht-Bremsbetriebsstellung in eine Bremsbetriebsstellung bewegbar ist.

Erfindungsgemäß wird vorgeschlagen, dass Mittel vorgesehen sind, mittels denen ein Volumenstrom aus den torusförmigen Arbeitsraum abführbar ist, wobei ein Teilvolumenstrom durch einen Laufspalt zwischen Rotor und Rotorgehäuseteil in einen Ringspalt leitbar ist, durch den der Teilvolumenstrom zurück in den Arbeitsraum gelangt.

## Beschreibung

Die Erfindung betrifft einen hydrodynamischen Retarder nach dem Oberbegriff vom Anspruch 1.

Hydrodynamische Retarder sind seit langem bekannt, so dass hier auf eine Erläuterung der Grundfunktion verzichtet wird und ersatzweise auf den StdT verwiesen wird.

Bei einem Retarder bilden Rotor und Stator eine Funktionseinheit, die einen gemeinsamen Arbeitsraum umschießen, der mit einem Arbeitsmedium befüllbar ist. Im Bremsbetrieb wie auch Nicht-Bremsbetrieb muss die Schmierung und Kühlung des Retarders gewährleistet sein.

In beiden Betriebszuständen wird das Arbeitsmedium innerhalb des Arbeitsraums in eine Kreislaufströmung bzw. einer Meridianströmung versetzt. Durch die derart ausgebildete Meridianströmung wird ein Drehmoment - oder auch als Bremsmoment des Retarders bezeichnet - vom Rotor auf den Stator übertragen.

Die Größe des übertragbaren Bremsmomentes hängt dabei vom sogenannten Füllungsgrad des hydrodynamischen Retarders ab. Ist kein Bremsmoment erforderlich, wird der Retarder entleert, sodass der innere Widerstand des Retarders und damit die Verlustleistung möglichst gering ist. Die Entleerung sowie die Befüllung des Retarders kann beispielsweise mittels einer Drucksteuerung oder einer Pumpe erfolgen. Dabei wird das Arbeitsmedium aus einem Vorratsbehälter in den Arbeitsraum oder aus diesem zurück in den Vorratsbehälter gepumpt.

Im Nicht-Bremsbetrieb des Retarders ist es entscheidend den inneren Widerstand, das Schleppmoment zu reduzieren. Um dies zu erreichen, sind verschiedene Maßnahmen wie z.B. die Rotorverschiebung oder das Verwenden von Blenden, welche im inaktiven Zustand zwischen Stator und Rotor positioniert werden, bekannt. All diese Maßnahmen haben gemeinsam, dass sie die sich im Leerlauf einstellende Meridianströmung stören und somit die Schleppleistung verringern.

Auch wenn bei einem Retarder mit Rotorverschiebung der Rotor auf der Welle vom Stator weggeschoben wird, kann die Wechselwirkung zwischen Rotor und Stator nicht ganz beseitigt werden. Da auch die im Arbeitsraum verbleibende Luft ein Bremsmoment bewirkt und damit Wärme erzeugt. Weiterhin ist es auch im Nicht-Bremsbetrieb notwendig Arbeitsmedium, Wasser oder Öl, in den Arbeitsraum zu fördern. Nur so kann die Schmierung und Kühlung der retarderseitigen Rotorwellenlagerung gewährleistet werden, die ja auch im Nicht-Bremsbetrieb ständig mit der Getriebedrehzahl dreht.

Im Nicht-Bremsbetrieb ist es weiterhin erforderlich, den Füllstand auf einen erforderlichem Füllstand zu reduzieren. Überschüssiges Arbeitsmedium muss somit auch im Nicht-Bremsbetrieb abgeführt werden. Dies wird über eine Abschöpfeinrichtung gewährleistet. Eine Derartige Abschöpfeinrichtung ist beispielsweise aus der DE 10 2013 226 580 A1 bekannt. Hier ist eine Auslassöffnung mit Schutzelement bekannt.

In der DE 10 2008 049 283 wird beispielsweise vorgeschlagen, einen Schmierkanal zwischen der Druckseite der Absaugpumpe und dem Lager vorzusehen. Gleichzeitig wird vorgeschlagen, die Absaugpumpe nur zeitweise zu aktivieren, um die Verlustleistung zu minimieren. Nachteilig daran ist, dass so keine gleichmäßige Schmierung und Kühlung des Lagers erfolgt.

Die Aufgabe der Erfindung ist es, eine alternative Lösung vorzuschlagen, durch die die Schleppleistung eines Retarders weiter reduziert werden kann.

Die Aufgabe wird erfindungsgemäß durch eine Ausführung entsprechend dem unabhängigen Anspruch gelöst. Weitere vorteilhafte Ausführungsformen der vorliegenden Erfindung finden sich in den Unteransprüchen.

Es wird ein hydrodynamischer Retarder vorgeschlagen, der ein Rotor und ein Stator umfasst, die in einem zweiteiligen Gehäuse, einem Rotorgehäuseteil und einem Statorgehäuseteil angeordnet sind, wobei Rotor und Stator einen torusförmigen Arbeitsraum ausbilden, der über einen Einlasskanal und/oder eine Pumpe mit einem Arbeitsmedium befüllbar und über eine Auslasskanal und/oder einen Rückführkanal entleerbar ist, wobei der Rückführkanal eine Abschöpfbohrung im Rotorgehäuse mit einem Tank verbindet, so dass Arbeitsmedium aus dem Arbeitsraum abführbar ist, wobei der Rotor verschiebbar auf einer Retarderwelle positioniert ist und von einer Nicht-Bremsbetriebsstellung in eine Bremsbetriebsstellung bewegbar ist.

Erfindungsgemäß wird vorgeschlagen, dass Mittel vorgesehen sind, mittels denen ein Volumenstrom aus den torusförmigen Arbeitsraum abführbar ist, wobei ein Teilvolumenstrom durch einen Laufspalt zwischen Rotor und Rotorgehäuseteil in einen Ringspalt leitbar ist, durch den der Teilvolumenstrom zurück in den Arbeitsraum gelangt. Im Nicht-Bremsbetrieb sind Rotor und Stator so weit beabstandet, dass ein Ringspalt zwischen Rotor und Stator vorhanden ist. Wird nun ein Teilvolumenstrom durch diesen Ringspalt geleitet trifft dieser auf die Meridianströmung des Arbeitsmediums im Arbeitsraum. Das Aufeinandertreffen der Strömungen bewirkt, dass die Meridianströmung beeinflusst wird, so dass sich die Schleppverluste reduzieren.

Die Mittel können Abgriffsbohrungen sein die derart am Rotor angeordnet sind, dass eine Kanalverbindung zwischen Arbeitsraum und Laufspalt hergestellt wird. In einer bevorzugten Ausführung sind mehrere Abgriffsbohrungen über den Umfang verteilt am Rotor vorhanden.

So können mindestens 5 Abgriffsbohrungen über den Umfang verteilt am Rotor vorhanden sein. Vorzugsweise sind die Bohrungen derart verteilt, dass eine weitere Auswuchtung des Rotors überflüssig ist. Denkbar ist weiterhin, dass in einer besonderen Ausführung auch in fast allen Schaufellücken Abgriffsbohrungen vorgesehen sind, so dass bei einer Schaufelteilung von 21 auch 9, 14 oder bis zu 21 Abgriffsbohrungen vorgesehen sind.

Weiterhin können die Abgriffsbohrungen einen Durchmesser zwischen 3mm und 5mm, vorzugsweise zwischen 3,7mm und 4,3 mm aufweisen.

Des Weiteren sind Ausführungen denkbar bei denen die Abgriffsbohrungen entweder senkrecht zur Rotationsachse des Rotors oder mit einem Winkel von bis zu α = 45° zur Rotationsachse geneigt im Rotor angeordnet sind. Wobei die Winkel der einzelnen Abgriffsbohrungen unterschiedlich sein können. Im Idealfall ist eine Abgriffsbohrung derart positioniert und geneigt, dass diese tangential zum torusförmigen Arbeitsraum angeordnet ist, so dass das Arbeitsmedium tangential aus dem Arbeitsraum herausgeführt wird.

In einer bevorzugten Ausführung können die Abgriffsbohrungen in der Nicht-Bremsbetriebsstellung axial versetzt gegenüber der Abschöpfbohrung im Rotorgehäuse angeordnet sein. So erfolgt im Laufspalt eine Aufteilung des abgeführten Arbeitsmediumstroms in Teilströme, wobei ein erster Teilvolumenstrom wie bereits erwähnt zum Ringspalt geleitet wird, ein weiterer Teilvolumenstrom wird hinter den Rotor geleitet und ein dritter Teilvolumenstrom gelangt über die Abschöpfbohrung und den Rückführkanal zurück in den Tank.

Im Folgenden wird die Erfindung anhand von Figuren erläutert. Die Figuren zeigen im Einzelnen:
- Fig. 1: Steuerschema eines Retarders entsprechend dem StdT
- Fig. 2: Optionale Ausführungen der Abgriffsbohrung
- Fig. 3: Strömung von Arbeitsmedium durch Abgriffsbohrung und Abschöpfbohrung

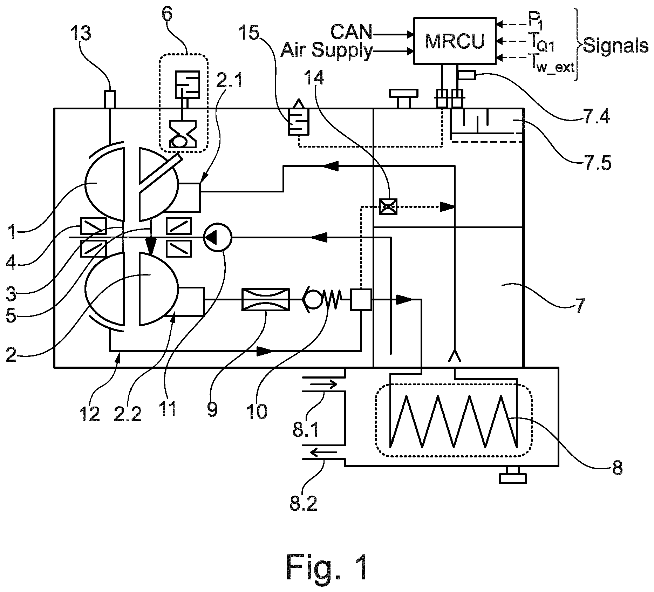

Figur 1 zeigt das Steuerschema eines Retarders entsprechend dem StdT. Da dieses Steuerschema allgemein bekannt ist wird auf die genauere Beschreibung verzichtet. Wesentlich für diese Erfindung ist der Arbeitsmediumkreislauf der auch im Nicht-Bremsbetrieb aktiv ist.

Der Rotor 1 ist über die Welle 3 auch im Nicht-Bremsbetrieb mit dem Antrieb gekoppelt und wird somit angetrieben solange sich das Fahrzeug bewegt. Auf der Welle 3 ist weiterhin die Pumpe 11 angeordnet, mittels der ein Arbeitsmediumstrom aus dem Tank 7 in den Arbeitsraum zwischen Rotor 1 und Stator 2 gepumpt wird, sobald die Welle 3 dreht. Der Arbeitsmediumstrom über die Pumpe ist derart dimensioniert, dass die Schleppleistung des Retarders reduziert und eine Ausreichende Kühlung erreicht wird. Das in den Arbeitsraum gepumpte Arbeitsmedium bildet eine Meridianströmung im Arbeitsraum aus. Damit sich nicht zu viel Arbeitsmedium im Arbeitsraum sammelt und so die Schleppleistung unnötig vergrößert wird, muss überschüssiges Arbeitsmedium wieder aus dem Arbeitsmedium abgeführt werden.

Über eine Abschöpfvorrichtung wird das Arbeitsmedium dann wieder am Außendurchmesser des Rotors 1 abgeschöpft und über den Rückführkanal zurück in den Tank 7 gepumpt. Zur Kühlung wird es noch durch den Wärmetauscher 8 geführt bevor es in den Tank gelangt.

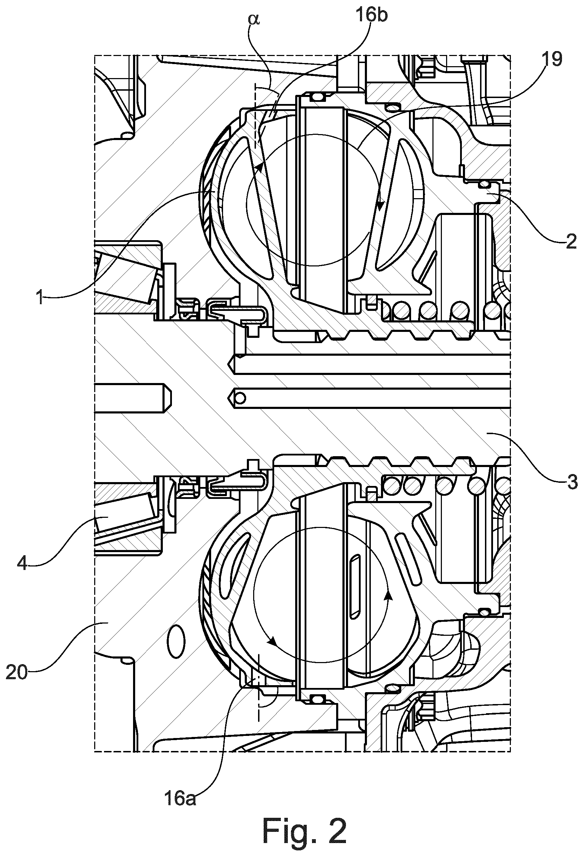

Figur 2 zeigt zwei optionale Ausführungen der Abgriffsbohrung 16a, b die beispielhaft an einem Rotor 1 dargestellt sind. Durch zusätzliche Abgriffsbohrungen im Torus des Rotors, auf der Druckseite der Schaufel wird im Leerlauf das Arbeitsmedium (Öl / Wasser) auf die Rückseite des Rotors geleitet und strömt somit nicht direkt in den Stator ein. Ein Volumenstrom 21 des Meridianstroms wird somit über die Abgriffsbohrungen 16a, b abgegriffen, so dass ein Teilstrom in den Zwischenraum zwischen Rotor 1 und Rotorgehäuse 20a geleitet wird.

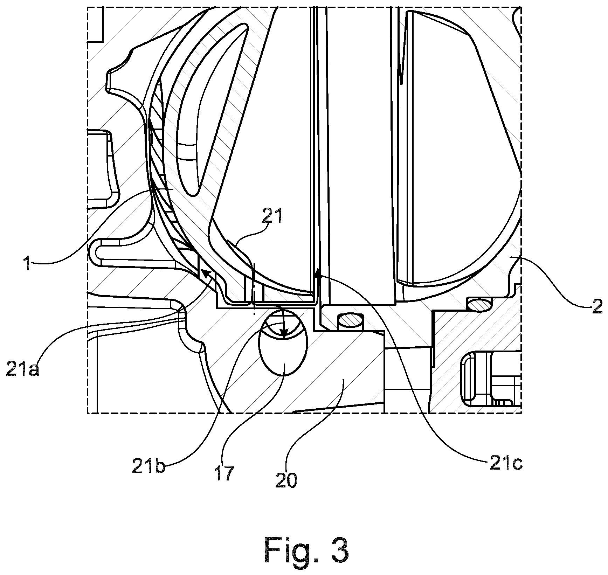

Wie in Figur 3 zu erkennen, ist zwischen der zylinderförmigen Umfangsfläche 24 des Rotors 1 und dem Rotorgehäuses 20a ein Laufspalt 22 vorgesehen. Gelangt der Volumenstrom 21 in den Laufspalt 22 wird er dort nochmals in Teilvolumenströme 21a, b, c aufgeteilt. Der erste Teilvolumenstrom 21a gelangt hinter den Rotor, ein zweiter Teilvolumenstrom 21b wird über die Abschöpfbohrung 17 abgeführt und ein dritter Teilvolumenstrom 21c, die Störströmung, gelangt über den Laufspalt 22 in den Ringspalt 18 zwischen Rotor 1 und Stator 2 wieder zurück in den Arbeitsraum, dabei wird die Meridianströmung 19 gestört, so dass sich die Schleppleistung verringert.

Im Nicht-Bremsbetrieb wird der Laufspalt 18 zwischen Rotor 1 und Rotorgehäuse 20a gebildet, wobei der Laufspalt 22 im Bremsbetrieb zwischen Rotor 1 und Stator 2 gebildet wird. Der Laufspalt weist eine Länge in Axialrichtung von ca. 15mm - 25mm auf.

Über den Umfang des Rotors 1 sind 5 bis 21 Abgriffsbohrungen 16a, b gleichmäßig verteilt. Der Durchmesser einer Abgriffsbohrung 16a, b kann zwischen 3mm und 5mm aufweisen, wobei ein Durchmesser zwischen 3,7mm und 4,3 mm zu bevorzugen ist. Die Größe wie auch der Durchmesser haben eine Einen Einfluss auf die Verlustleistung. Wie bereits in Figur 2 dargestellt können die Abgriffsbohrungen 16a, b senkrecht zu der Außenfläche am Außendurchmesser 23 angebracht werden, alternativ können die Abgriffsbohrungen 16a, b auch mit einem Winkel von α = bis zu 45°geneigt im Rotor angeordnet sein. Besonders wirkungsvoll ist eine Bohrung mit einem Winkel α der so gewählt ist, dass die Bohrung tangential zur Torusoberfläche verläuft. Dies wird erreicht, wenn die Abgriffsbohrungen 16a, b in Axialrichtung gesehen von der Vorderkannte möglichst weit zurückversetzt sind. Damit die Abgriffsbohrungen 16a, b tangential zur Torusoberfläche weitergeführt werden kann, muss die Umfangsfläche 24 lang genug sein und die Form der Torusform entsprechend gewählt werden.

In der Abschöpfbohrung 17 kann eine Hülse positioniert sein, die aus einem verschleißfesten Material besteht.

### Bezugszeichenliste

- 1: Rotor
- 2: Stator
- 2.1 / 2.2: Einlasskanal /Auslasskanal
- 3: Retarderwelle
- 4, 5: Lager
- 6: Profilentlüftung
- 7: Tank
- 7.4: Sensor
- 7.5: Ölabscheider
- 8: Wärmetauscher
- 8.1, 8.2: Kühlwassereinlass / Kühlwasserauslass
- 9: Drossel
- 10: Rückschlagventil
- 11: Pumpe
- 12: Rückführkanal
- 13: Sensor
- 14: Drossel
- 15: Luftfilter
- 16a, b: Abgriffsbohrung
- 17: Abschöpfbohrung
- 18: Ringspalt
- 19: Meridianströmung
- 20a, b: Rotorgehäuse / Statorgehäuse
- 21: Volumenstrom
- 21a, b, c: Teilvolumenströme
- 22: Laufspalt
- 23: Außendurchmesser
- 24: Umfangsfläche

## Patentansprüche

1. Hydrodynamischer Retarder, umfassend ein Rotor (1) und ein Stator (2), die in einem zweiteiligen Gehäuse (20a, b), einem Rotorgehäuseteil (20a) und einem Statorgehäuseteil (20b) angeordnet sind, wobei Rotor (1) und Stator (2) einen torusförmigen Arbeitsraum ausbilden, der über einen Einlasskanal (2.1) und/oder eine Pumpe (11) mit einem Arbeitsmedium befüllbar und über eine Auslasskanal (2.2) und/oder einen Rückführkanal (12) entleerbar ist, wobei der Rückführkanal (12) eine Abschöpfbohrung (17) im Rotorgehäuse (20a) mit einem Tank (7) verbindet, so dass Arbeitsmedium aus dem Arbeitsraum abführbar ist, wobei der Rotor (1) verschiebbar auf einer Retarderwelle (3) positioniert ist und von einer Nicht-Bremsbetriebsstellung in eine Bremsbetriebsstellung bewegbar ist,
**dadurch gekennzeichnet,**
**dass** Mittel (16a, b) vorgesehen sind, mittels denen ein Volumenstrom (21) aus den torusförmigen Arbeitsraum abführbar ist, wobei ein Teilvolumenstrom (21a) durch einen Laufspalt (22) zwischen Rotor (1) und Rotorgehäuseteil (20a) in ein Ringspalt (18) leitbar ist, durch den der Teilvolumenstrom (21a) zurück in den Arbeitsraum gelangt.

2. Hydrodynamischer Retarder, nach Anspruch 1
**dadurch gekennzeichnet,**
**dass** die Mittel (16a, b) Abgriffsbohrungen (16a, b) sind, die derart am Rotor (1) angeordnet sind, dass eine Kanalverbindung zwischen Arbeitsraum und Laufspalt herstellt wird.

3. Hydrodynamischer Retarder, nach Anspruch 2,
**dadurch gekennzeichnet,**
**dass** mehrere Abgriffsbohrungen (16a, b) über den Umfang verteilt am Rotor (1) vorhanden sind.

4. Hydrodynamischer Retarder, nach Anspruch 3,
**dadurch gekennzeichnet,**
**dass** mindestens 5 Abgriffsbohrungen (16a, b) über den Umfang verteilt am Rotor (1) vorhanden sind.

5. Hydrodynamischer Retarder, nach Anspruch 2 oder 3,
**dadurch gekennzeichnet,**
**dass** die Abgriffsbohrung 16a, b einen Durchmesser zwischen 3mm und 5mm, vorzugsweise zwischen 3,7mm und 4,3 mm aufweisen.

6. Hydrodynamischer Retarder, nach Anspruch 2 oder 3,
**dadurch gekennzeichnet,**
**dass** die Abgriffsbohrungen (16a, b) senkrecht zur Rotationsachse des Rotors (1) oder mit einem Winkel von bis zu α = 45° zur Rotationsachse geneigt im Rotor angeordnet sind.

7. Hydrodynamischer Retarder, nach Anspruch 1,
**dadurch gekennzeichnet,**
**dass** die Abgriffsbohrungen (16a, b) in der Nicht-Bremsbetriebsstellung axial versetzt gegenüber der Abschöpfbohrung (17) im Rotorgehäuse angeordnet ist.
